# EUROPÄISCHE PATENTSCHRIFT

(11) **EP 2 380 432 B1**
(45) Veröffentlichungstag und Bekanntmachung des Hinweises auf die Patenterteilung: **30.07.2014**
(21) Anmeldenummer: 11003256.2
(22) Anmeldetag: 19.04.2011
(51) Int. Cl.: A01K 47/02, A01K 47/04, A01K 59/00

(54) **Vorrichtung zur Gewinnung von Wabenhonig**
Method for producing comb honey
Dispositif de production de miel en rayon

(30) Priorität: 20.04.2010 DE 102010015796
(43) Veröffentlichungstag der Anmeldung: 26.10.2011
(73) Patentinhaber: KDVW GmbH & Co. KG, 33803 Steinhagen (DE)
(72) Erfinder: Hörmann, Jan, 33803 Steinhagen (DE)
(74) Vertreter: Brandt, Detlef

(56) Entgegenhaltungen:
- DE-A1- 4 206 763
- DE-T2- 69 801 558
- GB-A- 1 563 055
- US-A- 2 146 844
- US-A1- 2007 060 021

## Beschreibung

Die Erfindung betrifft eine Vorrichtung zur Gewinnung von Wabenhonig mit einem quaderförmigen, mit zwei Flachseiten versehenen, in einen Bienenstock einsetzbaren Gehäuse, wobei im Innenraum des Gehäuses eine Mehrzahl von mit jeweils einer Öffnung versehenen Behältern so angeordnet sind, dass die jeweilige Öffnung eines Behälters an einer der Flachseiten des Gehäuses angeordnet ist.

Vorrichtungen zur Gewinnung von Wabenhonig mit den gattungsgemäß geschilderten Merkmalen sind beispielsweise aus der DE 698 01 558 T2 bekannt. In der genannten Schrift wird eine Vorrichtung zur Gewinnung von Frischhonig vorgestellt, bei der in einem Gehäuse aus hartschaumartigen Material eine Mehrzahl von Ausnehmungen eingebracht sind, in die Behälter aus transparentem Glas eingesetzt sind. Die Gehäuse werden in einen Bienenstock eingesetzt, wobei die Bienen die Möglichkeit haben, in die Behälter Waben zu bauen, in welche der von den Honigbienen gesammelte Wabenhonig eingebracht und gespeichert wird.

Die in der genannten Schrift beschriebene Vorrichtung hat den Nachteil, dass das Gehäuse mit seinen Ausnehmungen die Verwendung von speziellen Behältern erfordert, wobei die jeweiligen Ausnehmungen an die Größe der Gläser angepasst werden müssen. Darüber hinaus ist die Entnahme der gefüllten Behälter mit einem entsprechenden Aufwand verbunden.

Zum Stand der Technik wäre darüber hinaus zusätzlich beispielsweise die FR 2 653 298 A1 zu nennen, in der eine Vorrichtung zur Gewinnung von Wabenhonig offenbart ist, die eine horizontale, mit Durchbrechungen versehene, in den Bienenstamm eingebrachte Platte aufweist, wobei Gefäße zur Aufnahme des Wabenhonigs mit den Öffnungen nach unten auf die Durchbrechungen der Platte, die einen geringeren Durchmesser als die Öffnungen der Gefäße aufweisen, aufgesetzt sind.

Darüber hinaus sind aus der US 2007/0 060 021 A1, der GB 1 563 055 A und der DE 42 06 763 A1 verschiedene Vorrichtungen zur Gewinnung von Wabenhonig bekannt, die auswechselbare Rahmensysteme in den Bienenstock einbringen.

Ausgehend von den aus dem Stand der Technik beispielsweise in der o.g. Schrift bekannten Vorrichtungen ist es Aufgabe der Erfindung, eine Vorrichtung zur Gewinnung von Wabenhonig bereit zu stellen, welche einfach aufgebaut ist und die Möglichkeit bietet, Behälter unterschiedlicher Größe einfach und kostensparend in eine Vorrichtung zur Gewinnung von Wabenhonig mit den gattungsbildenden Merkmalen einzusetzen.

Die gestellte Aufgabe wird in Zusammenschau mit den gattungsbildenden Merkmalen durch die im kennzeichnenden Teil des Anspruches 1 offenbarte technische Lehre gelöst.

Erfindungswesentlich ist dabei, dass das Gehäuse aus einem umlaufenden Gehäuserahmen und zwei an der Vorderseite und der Rückseite des Gehäuses angeordneten Abdeckplatten besteht, wobei die Abdeckplatten mit Durchbrechungen zum Innenraum des Gehäuses versehen sind und dass jeder Behälter an seiner mit der Öffnung versehenen Oberseite hinter einer Durchbrechung der Abdeckplatten angeordnet ist und einen Koppelmechanismus aufweist, der mit einem an der Innenseite der Abdeckplatten im Randbereich der Durchbrechungen angeordneten Haltemechanismus dergestalt zusammenwirkt, dass die Behälter an einer der Abdeckplatten lösbar festgelegt sind.

Koppelmechanismus und Haltemechanismus können dabei vorteilhafterweise beispielsweise als Bajonett- oder Schraubverbindung ausgestaltet sein. Eine Schraubverbindung hat den Vorteil, dass übliche Schraubgläser, wie sie für Verpackungszwecke allgemein und kostengünstig am Markt verfügbar sind, an der Innenseite der Abdeckplatten befestigt werden können. Die Verschraubung der Behälter mit den Abdeckplatten gewährleistet dabei, dass der Innenraum des Gehäuses zwischen den Behältern für die Honigbienen unzugänglich ist, so dass die Außenseite der Behälter ohne Verunreinigungen wie beispielsweise Wabenmaterial bleibt und die Behälter nach der Entnahme aus dem Gehäuse unmittelbar mit einem Deckel versehen verkaufsfertig sind.

Besondere Ausgestaltungen des Gegenstandes der Erfindung ergeben sich zusätzlich aus den auf den Hauptanspruch bezogenen Merkmalen der Unteransprüche.

Es hat sich insbesondere aus Kosten- und Platzgründen als vorteilhaft erwiesen, in beiden Abdeckplatten der Vorderseite und der Rückseite des Gehäuses Durchbrechungen anzuordnen, so dass die Bienen Wabenhonig in entsprechende Behälter von beiden Seiten des Gehäuses einbringen können. Zur leichteren Herstellung des Gehäuses können die in den Abdeckplatten angeordneten Durchbrechungen miteinander fluchtend angeordnet sein.

Darüber hinaus kann es zweckmäßig sein, zur Erleichterung des Wabenbaus den Boden der Behälter mit einer Wabenstruktur zu versehen.

Im Folgenden werden zwei Ausführungsbeispiele des Gegenstandes der Erfindung anhand der beigefügten Zeichnungen näher erläutert.

Es zeigt:
- Fig. 1: eine perspektivische Gesamtdarstellung der erfindungsgemäßen Vorrichtung zur Gewinnung von Wabenhonig,
- Fig. 2: die Vorrichtung gemäß Figur 1 eingesetzt in einen Bienenkasten
- Fig. 3: eine Schnittdarstellung durch ein Gehäuse entsprechend Figur 1
- Fig. 4: eine Schnittdarstellung durch eine zweite Variante der erfindungsgemäßen Vorrichtung und
- Fig. 5: eine Schnittdarstellung durch einen zur Vorrichtung gehörigen Behälter.

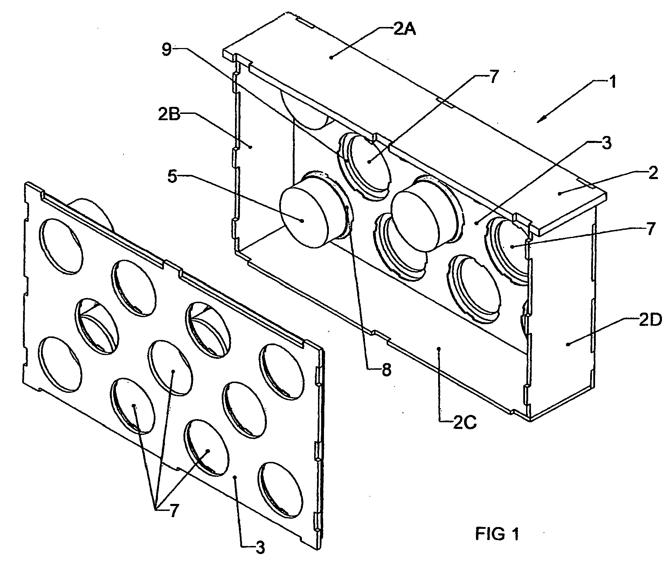

Die in der Figur 1 dargestellte Vorrichtung besteht im Wesentlichen aus einem insgesamt mit 1 bezeichneten Gehäuse, welches quaderförmig ausgebildet ist und einen umlaufenden Gehäuserahmen 2 aufweist. Der Gehäuserahmen 2 besteht dabei aus vier Rahmenteilen, 2A, 2B, 2C und 2D, wobei an der Vorderseite und der Rückseite des Gehäuserahmens 2 jeweils eine Abdeckplatte 3 und 4 angeordnet sind. Die Abdeckplatten 3 und 4 sind jeweils mit einer Mehrzahl von Durchbrechungen 7 versehen, die im vorliegenden Ausführungsbeispiel als runde Löcher ausgebildet sind. An der Innenseite der Abdeckplatten im Randbereich der Durchbrechungen 7 ist jeweils ein als Verschraubung ausgebildeter Haltemechanismus 9 angeordnet, welcher dazu dient, an diesem Haltemechanismus jeweils einen Behälter 5 anzuschrauben. Der jeweilige Behälter 5 ist vorzugsweise aus Glas hergestellt, mit einen Öffnung 6 versehen und an seinem mit der Öffnung 6 versehenen Oberseite mit einem zum Haltemechanismus 9 korrespondierenden Koppelmechanismus 8 in Form einer korrespondierenden Verschraubung versehen.

Durch die Ausgestaltung der Behälter mit dem Koppelmechanismus und der Abdeckplatten im Randbereich der Durchbrechungen mit einem entsprechenden Haltemechanismus ist gewährleistet, dass auf einfache Art und Weise entsprechende Behälter, in denen die Honigbienen eines Bienenstocks Wabenhonig erzeugen sollen, in ein vorhandenes Gehäuse 1 einzusetzen.

Die Durchbrechungen 7 können dabei nur in einer Abdeckplatte 3 beispielsweise der Vorderseite eingebracht werden oder, wie dies in der Figur 1 ersichtlich ist, sowohl in der Vorder- als auch Rückseite des Gehäuses 1.

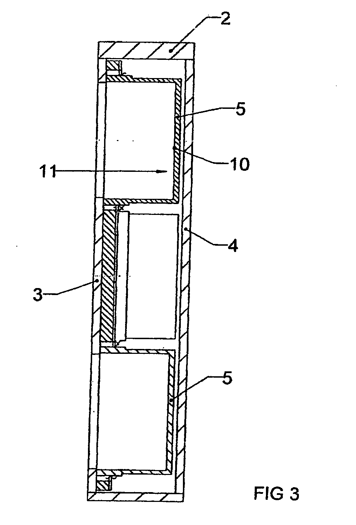

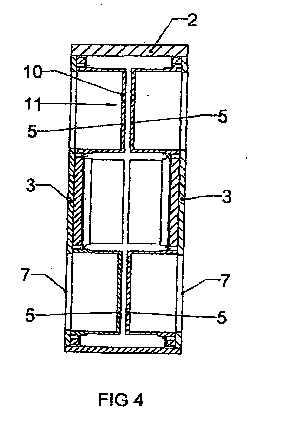

Ist eine entsprechende Ausgestaltung mit Durchbrechungen 7 an der Vorderseite und der Rückseite des Gehäuses 1 gewählt, so ergibt sich eine Schnittdarstellung entsprechend der Figur 4. Aus dieser Figur ist ersichtlich, dass jeweils zwei Behälter mit ihren Bodenflächen gegeneinander innerhalb des Gehäuses 1 platziert sind, so dass sich an beiden Seiten des Gehäuses 1 entsprechende Öffnungen für die Honigbienen ergeben. Im Gegensatz zu der Ausgestaltung der Figur 4 ist in der Schnittdarstellung der Figur 3 das Gehäuse 1 so ausgebildet, dass es als Rückwand eine geschlossene Abdeckplatte 4 aufweist.

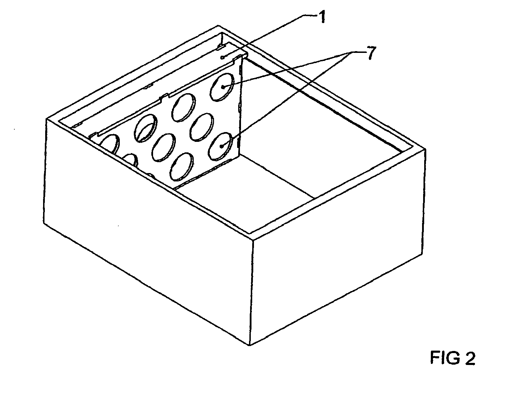

Aus der Figur 2 ist schematisch ersichtlich, wie die erfindungsgemäße Vorrichtung zur Gewinnung von Wabenhonig in einen Bienenstock eingesetzt ist. Die einzelnen Vorrichtungen werden im Bienenstock so platziert, dass ein ausreichender Abstand für die Honigbienen vorhanden ist, damit sie in die einzelnen Behälter 5 hinein schlüpfen können.

Natürlich ist das Wesen der Erfindung nicht darauf beschränkt, dass eine Ausgestaltung entsprechend der Figuren gewählt wird. Des Weiteren kann die Kombination aus Koppelmechanismus 8 und Haltemechanismus 9 nicht nur als Verschraubung ausgebildet sein, sondern ggf. auch als Bajonettverbindung ausgeführt werden.

Efindungswesentlich ist allein, dass eine schnelle und haltbare Anbindung der Behälter 5 an den Abdeckplatten 3 bzw. 4 des Gehäuses 1 vorgenommen werden kann, wobei gleichzeitig gewährleistet ist, dass die Bienen keinen Zugang zum Innenraum des Gehäuses 1 haben.

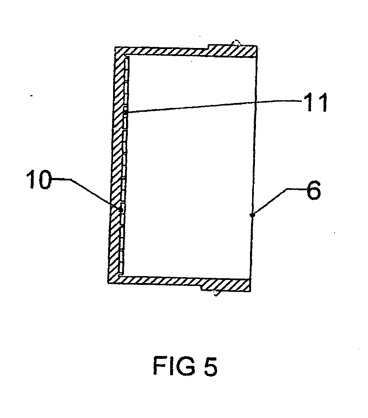

Um den Honigbienen die Herstellung von Honigwaben innerhalb der Behälter 5 zu erleichtern, kann es ergänzend von Vorteil sein, am Bodenbereich 10 der Behälter 5 jeweils eine Wabenstruktur in das Glasmaterial der Behälter 5 einzuarbeiten, wie dies in der Fig. 5 dargestellt ist.

### Bezugszeichenliste

- 1: Gehäuse
- 2: Gehäuserahmen
- 3: Abdeckplatte
- 4: Abdeckplatte
- 5: Behälter
- 6: Öffnung
- 7: Durchbrechung
- 8: Koppelmechanismus
- 9: Haltemechanismus
- 10: Bodenbereich
- 11: Wabenstruktur

## Patentansprüche

1. Vorrichtung zur Gewinnung von Wabenhonig mit einem quaderförmigen, mit zwei Flachseiten versehenen, in einen Bienenstock einsetzbaren Gehäuse, wobei im Innenraum des Gehäuses eine Mehrzahl von mit jeweils einer Öffnung versehenen Behältern so angeordnet sind, dass die jeweilige Öffnung eines Behälters an einer der Flachseiten des Gehäuses angeordnet ist,
**dadurch gekennzeichnet, dass**
das Gehäuse (1) aus einem umlaufenden Gehäuserahmen (2) und zwei an der Vorderseite und der Rückseite des Gehäuses angeordneten Abdeckplatten (3, 4) besteht, wobei die Abdeckplatten (3, 4) mit Durchbrechungen (7) zum Innenraum des Gehäuses (1) versehen sind und dass jeder Behälter (5) an seiner mit der Öffnung (6) versehenen Oberseite hinter einer Durchbrechung (7) der Abdeckplatten (3, 4) angeordnet ist und einen Koppelmechanismus (8) aufweist, der mit einem an der Innenseite der Abdeckplatten (3, 4) im Randbereich der Durchbrechungen (7) angeordneten Haltemechanismus (9) dergestalt zusammenwirkt, dass die Behälter (5) an einer der Abdeckplatten (3, 4) lösbar festgelegt sind.

2. Vorrichtung nach Anspruch 1,
**dadurch gekennzeichnet, dass**
Koppelmechanismus (8) und Haltemechanismus (9) als Gewindeverbindung gestaltet sind.

3. Vorrichtung nach Anspruch 1,
**dadurch gekennzeichnet, dass**
Koppelmechanismus (8) und Haltemechanismus (9) als Bajonettverbindung gestaltet sind.

4. Vorrichtung nach einem der Ansprüche 1 bis 3,
**dadurch gekennzeichnet, dass**
in beiden Abdeckplatten (3, 4) an Vorderseite und Rückseite des Gehäuses (1) Durchbrechungen (7) angeordnet sind.

5. Vorrichtung nach Anspruch 4,
**dadurch gekennzeichnet, dass**
die in beiden Abdeckplatten (3, 4) angeordneten Durchbrechungen (7) miteinander fluchtend angeordnet sind.

6. Vorrichtung nach einem der Ansprüche 1 bis 5,
**dadurch gekennzeichnet, dass**
der den Öffnungen (6) gegenüberliegende Bodenbereich der Behälter (7) mit einer Wabenstruktur versehen ist.

## Claims

1. A device for producing comb honey having a box-shaped housing which is provided with two flat sides and can be inserted into a beehive, wherein a plurality of containers, each provided with an opening, are arranged in the interior of the housing in such a way that the respective opening of a container is arranged on one of the flat sides of the housing,
**characterised in that**
the housing (1) comprises a circumferential housing frame (2) and two cover plates (3, 4) which are arranged on the front side and the rear side of the housing, wherein the cover plates (3, 4) are provided with through-holes (7) to the interior of the housing (1) and **in that** each container (5) is arranged with its upper side provided with the opening (6) behind a through-hole (7) of the cover plates (3, 4) and has a coupling mechanism (8) which cooperates with a holding mechanism (9), which is arranged on the inside of the cover plates (3, 4) in the edge region of the through-holes (7), in such a way that the containers (5) are detachably fixed to one of the cover plates (3, 4).

2. A device according to Claim 1,
**characterised in that**
the coupling mechanism (8) and holding mechanism (9) are designed as a threaded connection.

3. A device according to Claim 1,
**characterised in that**
the coupling mechanism (8) and holding mechanism (9) are designed as a bayonet connection.

4. A device according to one of Claims 1 to 3,
**characterised in that**
through-holes (7) are arranged in both cover plates (3, 4) on the front side and rear side of the housing (1).

5. A device according to Claim 4,
**characterised in that**
the through-holes (7) arranged in both cover plates (3, 4) are arranged in alignment with one another.

6. A device according to one of Claims 1 to 5,
**characterised in that**
the base region of the containers (7), which is cpposite the openings (6), is provided with a honeycomb structure.

## Revendications

1. Dispositif pour la collecte de miel en rayon avec un boîtier parallélépipédique pourvu de deux côtés plats pouvant être mis en place dans une ruche, une pluralité de récipients pourvus chacun d'une ouverture étant disposés à l'intérieur du boîtier de telle manière que l'ouverture de chaque récipient soit disposée contre un des côtés plats du boîtier,
**caractérisé en ce que**
le boîtier (1) est constitué d'un cadre de boîtier (2) périphérique et de deux plaques de couverture (3, 4) disposées sur le côté avant et sur le côté arrière du boîtier, lesdites plaques de couverture (3, 4) étant pourvues de perforations (7) ouvrant vers l'intérieur du boîtier (1), et **en ce que** chaque récipient (5) est disposé par son sommet pourvu de l'ouverture (6) derrière une perforation (7) des plaques de couverture (3, 4) et comporte un mécanisme d'accouplement (8) qui coopère avec un mécanisme de retenue (9) disposé sur la face intérieure des plaques de couverture (3, z) dans la zone de bord des perforations (7), de telle manière que le récipient (5) soit fixé de manière amovible contre une des plaques de couverture (3, 4).

2. Dispositif selon la revendication 1, **caractérisé en ce que**
le mécanisme d'accouplement (8) et le mécanisme de retenue (9) sont réalisés comme connexion à vis.

3. Dispositif selon la revendication 1, **caractérisé en ce que**
le mécanisme d'accouplement (8) et le mécanisme de retenue (9) sont réalisés comme connexion à baïonnette.

4. Dispositif selon l'une des revendications 1 à 3, **caractérisé en ce que**
des perforations (7) sont ménagées dans les deux plaques de couverture (3, 4) sur le côté avant et sur le côté arrière du boîtier (1).

5. Dispositif selon la revendication 4, **caractérisé en ce que**
les perforations (7) ménagées dans les deux plaques de couverture (3, 4) sont alignées entre elles.

6. Dispositif selon l'une des revendications 1 à 5, caractérisé es ce que
la partie de fond du récipient (7; opposée aux ouvertures (6) est pourvue d'une structure alvéolaire.
